# EUROPÄISCHE PATENTANMELDUNG

(11) **EP 4 566 786 A1**
(43) Veröffentlichungstag der Anmeldung: **11.06.2025**
(21) Anmeldenummer: 24216260.0
(22) Anmeldetag: 28.11.2024
(51) Int. Cl.: B29B 17/04, B02C 18/00, B02C 18/06

(54) **SYSTEM UND VERFAHREN ZUR WIEDERAUFBEREITUNG VON ULTRAHOCHMOLEKULAREN POLYMERFOLIENABSCHNITTEN**

(30) Priorität: 08.12.2023 DE 102023134446
(71) Anmelder: Brückner Maschinenbau GmbH, 83313 Siegsdorf (DE)
(72) Erfinder: Nadler, Alexander, 83339 Chieming (DE); Knoche, Dr., Thomas, 83278 Traunstein (DE); Glag, Fabian, 83132 Pittenhart (DE); Marey, Benjamin, 83071 Stephanskirchen (DE)
(74) Vertreter: Flach Bauer & Partner Patentanwälte mbB

(57) **Zusammenfassung**

Die vorliegende Erfindung betrifft ein System und ein Verfahren zur Wiederaufbereitung von ultrahochmolekularen Polymerfolienabschnitten. Das System umfasst eine Zuführvorrichtung 202 und eine Zerkleinerungsvorrichtung 203. Die Zuführvorrichtung ist dazu eingerichtet einen ultrahochmolekularen Polymerfolienabschnitt an die Zerkleinerungsvorrichtung bereitzustellen. Die Zerkleinerungsvorrichtung umfasst zumindest ein Schneidsieb, wobei das Schneidsieb eine Vielzahl von Sieböffnungen und eine Vielzahl von Schneidvorsprüngen umfasst, wobei zumindest ein Schneidvorsprung eine ihm zugeordnete Sieböffnung überspannt, und wobei die Zerkleinerungsvorrichtung dazu eingerichtet ist eine Relativbewegung zwischen dem Schneidsieb und dem zugeführten Polymerfolienabschnitt zu erzeugen, um den Polymerfolienabschnitt zu zerkleinern.

## Beschreibung

### Gebiet der Erfindung

Die vorliegende Erfindung betrifft ein System und ein Verfahren zur Wiederaufbereitung von ultrahochmolekularen Polymerfolienabschnitten, insbesondere Membranfolien, wie Batterieseparator-, BSF, -Folienabschnitten.

### Hintergrund

Bei der Folienherstellung, insbesondere bei der Herstellung von biaxial verstreckten Folien sowohl für Verpackungs- als auch für technische Anwendungen, ist es üblich, dass Produktionsabfälle wiederaufbereitet und in Form von sogenannten Flakes, Regranulaten, Agglomeraten oder auch direkt als Folienmahlgut in die Produktionsprozesse zurückgeführt werden.

Eine Besonderheit unter den biaxial verstreckten Folien stellen Folien dar, die auf ultrahochmolekularen Polymeren basieren. Derartige Folien werden beispielsweise als Batterieseparatorenfolien (auch als BSF-Folien bezeichnet) verwendet. BSF-Folien sind poröse, insbesondere mikroporöse, Folien und dienen bei der Herstellung von Batterien, wie Lithium-Ionen-Batterien als Ionen-Membrane.

Anders als bei der sonst üblichen Folienproduktion werden bei der Herstellung von porösen, ultrahochmolekularen Polymerfolien bei der Extrusion keine Kunststoffgranulate aufgeschmolzen. Aufgrund des hohen Molekulargewichts von üblicherweise 400.000 bis ≥ 2.000.000 g/mol weisen die ultrahochmolekularen Polymere eine sehr hohe Schmelzeviskosität auf, sodass diese nicht ohne Weiteres in einem herkömmlichen Schneckenextruder aufgeschmolzen werden können.

Um die Bearbeitbarkeit zu verbessern, wird das ultrahochmolekulare Polymer, wie beispielsweise ultrahochmolekulares Polyethylen (UHMWPE), in Pulverform bereitgestellt und mit Öl, insbesondere Weißöl vermischt. Der Masseanteil des Öls kann dabei in einem Bereich von typischerweise 50 Gew.% bis 90 Gew.%, oder in einem Bereich von 60 Gew. % bis 80 Gew.% liegen. Beispielsweise liegt der Masseanteil des Öls bei 70 Gew.%.

Das Polymer und das Öl können vor und/oder während der Extrusion vermischt werden. Das heißt, das Öl kann beispielsweise direkt in den Extruder, beispielsweise ein Doppelschneckenextruder, eingespritzt werden. Im Extruder bilden UHMWPE und Öl eine homogene, hochviskose Schmelze. Werden UHMWPE und Öl bereits vor der Extrusion vermischt, bildet sich zunächst eine Suspension (auch "Slurry" genannt), die dann dem Extruder zugeführt und aufgeschmolzen werden kann.

Dieses Polymer-Öl-Gemisch wird über eine Düse, z.B. eine Flachdüse, extrudiert und in weiteren Verfahrensschritten zu einer Folie verstreckt. Die Verstreckung erfolgt typischerweise bidirektional, d.h. in Längsrichtung (MD-Richtung) und in Querrichtung (TD-Richtung). Die bidirektionale Verstreckung kann sequentiell oder simultan erfolgen. Ebenso sind unidirektional verstreckte Folien bekannt, die nur in Längs- oder in Querrichtung verstreckt werden.

Nach dem Verstrecken der Folie wird das in der Folie eingebettete Öl, insbesondere Weißöl, in einem Lösungsmittelbad ausgewaschen, wodurch die Porosität mit offener Porenstruktur der Folie erzeugt wird.

Das Lösungsmittel (beispielsweise Dichlormethan (DCM) oder Hexan) kann nach dem Auswaschbad mit Hilfe von Heizwalze(n) in einer Folientrocknungseinheit verdampft werden. Ebenso ist es bekannt, Folien mit Belüftungsdüsen, beispielsweise in einem Schwebetrockner oder Ofen zu trocknen.

Dieses Folienherstellungsverfahren wird auch als Nassprozess oder Wet-Prozess bezeichnet. Die Polymerfolie enthält bis zum Erreichen des Auswaschbades 50 Gew.% bis 90 Gew.%, oder 60 Gew. % bis 80 Gew.% Öl und wird als "nasse" Folie bezeichnet. Nach dem Auswaschen des Öls ist die Folie im Wesentlichen Öl-frei und wird als "trockene" Folie bezeichnet. Diese trockene Folie hat typischerweise einen Ölanteil von <5 Gew.%, vorzugsweise <1 Gew.%.

Derzeit werden Produktionsabfälle dieser porösen, ultrahochmolekularen Polymerfolien, wie sie beispielsweise durch Folienbahnrisse, Beschnitt und Besäumung der Folien entstehen, nicht aufbereitet bzw. wiederverwendet. Dies gilt für die "nassen" sowie für die "trockenen" Produktionsabfälle gleichermaßen.

Grund hierfür ist zum einen, dass das ultrahochmolekulare Polymer (beispielsweise UHMWPE) aufgrund des hohen Molekulargewichts und der damit einhergehenden hohen Schmelzeviskosität nicht wie andere Polymere in einem üblichen Recycling-Extrusionsverfahren aufgeschmolzen und regranuliert werden kann.

Des Weiteren wird für die Wiederverwertung bzw. Herstellung von porösen, ultrahochmolekularen Polymerfolien, wie BSF-Folien, ein sehr feines, pulverartiges Rezyklat benötigt, da sonst bei der Extrusion keine ausreichende Durchmischung mit dem Öl und keine komplette, Stippen-freie Aufschmelzung stattfindet. Nicht oder nicht vollständig aufgeschmolzene Partikel, sogenannte Stippen sowie Einschlüsse in der Schmelze führen in der weiteren Folienproduktion zu Qualitätseinbußen und erneutem Ausschuss.

Die in der Folienextrusion üblichen Rezyklate in Form von Regranulat, Agglomerat oder auch Mahlgut (Partikelgrößen > 2 mm) sind für die Herstellung von ultrahochmolekularen Polymerfolien ungeeignet.

Daher werden derzeit nasse und trockene Folien-Produktionsabfälle nur thermisch verwertet, oder müssen deponiert werden. Dies führt zu hohen Produktionskosten und einer schlechten CO₂e-Bilanz, da die teuren ultrahochmolekularen Polymere nicht wiederverwendet werden können und stets neues Polymer der Extrusion zugeführt werden muss.

### Beschreibung der Erfindung

Vor diesem Hintergrund stellt sich die vorliegende Erfindung die Aufgabe, ein System sowie ein Verfahren zur Wiederaufbereitung von ultrahochmolekularen Polymerfolienabschnitten, insbesondere von Membranfolien, wie BSF-Folien, bereitzustellen.

Die Aufgabe wird durch ein System nach Anspruch 1 sowie durch ein Verfahren gemäß Anspruch 12 gelöst. Weitere Aspekte der Erfindung sind in den Unteransprüchen sowie der nachfolgenden Beschreibung dargestellt.

Insbesondere wird die Aufgabe durch ein System zur Wiederaufbereitung von ultrahochmolekularen Polymerfolienabschnitten, insbesondere Batterieseparator-, BSF, -Folienabschnitten gelöst. Folienabschnitte umfassen insbesondere Produktionsabfälle, wie Randstreifen und Ausschuss, können jedoch auch Folien aus gebrauchten Batterien umfassen.

Die Polymerfolienabschnitte sind insbesondere sogenannte trockene Polymerfolienabschnitte, d.h. Polymerfolienabschnitte, die im Wesentlichen frei von Öl, insbesondere Weißöl sind. Der Öl-Anteil in den Polymerfolienabschnitten liegt insbesondere unter 5 Gew.%, oder unter 1 Gew.%.

Die wiederaufzubereitenden Folien bzw. Folienabschnitte sind Folien, die aus ultrahochmolekularen Polymeren, wie ultrahochmolekularem Polyethylen (UHMWPE) gefertigt wurden. Insbesondere können diese Folien in einem Nassprozess gefertigt worden sein.

Ultrahochmolekulares Polyethylen ist eine Untergruppe des thermoplastischen Polyethylens und zeichnet sich durch ein hohes Molekulargewicht aus. Das Molekulargewicht kann im Bereich von 400.000 g/mol bis > 2.000.000 g/mol liegen.

Das System umfasst eine Zuführvorrichtung und eine Zerkleinerungsvorrichtung. Die Zuführvorrichtung ist dazu eingerichtet einen ultrahochmolekularen Polymerfolienabschnitt, an die Zerkleinerungsvorrichtung bereitzustellen. Die Zuführvorrichtung kann einen Walzeneinzug umfassen, welcher insbesondere dazu eingerichtet sein kann, eine Einzugsgeschwindigkeit (und somit eine Einzugsmenge) zu regeln. Somit kann die Menge an Folienabschnitt, die der Zerkleinerungsvorrichtung zugeführt wird, geregelt werden. Alternativ oder zusätzlich kann die Zuführeinrichtung ein Gebläse, oder eine pneumatische Zuführung (insbesondere Absaugeinrichtung) umfassen.

Beispielsweise können Produktionsabfälle, wie Randstreifen, die bei der Herstellung der ultrahochmolekularen Polymerfolienabschnitte anfallen, automatisiert abgeführt und mittels der Zuführvorrichtung an die Zerkleinerungsvorrichtung bereitgestellt werden. Dadurch können die Produktionsabfälle automatisch und kontinuierlich der Zerkleinerungsvorrichtung zugeführt werden.

Die Zerkleinerungsvorrichtung umfasst zumindest ein Schneidsieb. Das Schneidsieb umfasst eine Vielzahl von Sieböffnungen und eine Vielzahl von Schneidvorsprüngen. Zumindest ein Schneidvorsprung (oder alle Schneidvorsprünge) überspannt eine ihm zugeordnete Sieböffnung. Im Gegensatz zu einem Lochsieb, bei dem die Sieböffnung in der normalen Richtung offen liegen, sind bei dem erfindungsgemäßen Schneidsieb die Sieböffnungen jedenfalls teilweise überdeckt.

Die Zerkleinerungsvorrichtung ist dazu eingerichtet eine Relativbewegung zwischen dem Schneidsieb und dem zugeführten Polymerfolienabschnitt zu erzeugen, um den Polymerfolienabschnitt zu zerkleinern.

Die Relativbewegung sowie das Schneidsieb erlauben es die ultrahochmolekularen Polymerfolienabschnitte sehr fein zu zerkleinern, ohne dass dabei das Schneidsieb zu verstopfen droht. Es zeigt sich, dass das Schneidsieb auch bei einem hohen Zerkleinerungsgrad, d.h. bei der Herstellung eines feinen, pulverartigen Mahlguts (insbesondere im Fall von ultrahochmolekularen Polymeren), nicht verstopft. Zudem kommt es bei der Zerkleinerung von ultrahochmolekularen Polymerfolienabschnitten, wie UHMWPE- Polymerfolienabschnitten, zu keinem Aufschmelzen des Polymers. Stattdessen wird das Polymer zuverlässig zerkleinert. Hier unterscheidet sich die ultrahochmolekulare Polymerfolie in Ihren Eigenschaften deutlich von den sonst in der Folienextrusion üblichen Polymeren (z.B. PP, PET, PA, PS, etc...), welche bei einem solchen Zerkleinerungsverfahren mit den eingesetzten, feinen Schneidsieben die Sieblochung mit an- oder bereits aufgeschmolzenen Polymer zusetzen würden, so dass kein Produktaustrag mehr möglich wäre und das System in der Folge überlastet und verstopft.

Zudem gelingt die Zerkleinerung, ohne dass das Polymer aufgrund der Scherbeanspruchung oder Hitzeeinwirkung beim Zerkleinern geschädigt wird. Das erhaltene pulverartige Mahlgut (bzw. die zerkleinerten Polymerfolienabschnitte) weist eine hohe Qualität auf und kann als Rezyklat bei der Folienherstellung, insbesondere bei der BSF-Folienherstellung eingesetzt werden.

In einem Aspekt umfasst das System weiterhin eine Regelungsvorrichtung. Die Regelungsvorrichtung kann dazu eingerichtet sein, eine Einzugsgeschwindigkeit und/oder Einzugsmenge der Zuführvorrichtung zu regeln. Die Einzugsmenge kann insbesondere über die Leistungsaufnahme der Zerkleinerungsvorrichtung geregelt werden, denn die Leistungsaufnahme ist ein Indikator für den Füllgrad der Zerkleinerungsvorrichtung. Die Regelungsvorrichtung kann sodann die Einzugsgeschwindigkeit regeln, um einen Sollwert der Einzugsmenge zu erreichen. Beispielsweise kann eine Rotationsgeschwindigkeit von Einzugswalzen oder der Luftstrom eines Gebläses bzw. einer pneumatischen Zuführeinrichtung geregelt werden.

In einem Aspekt ist die Zerkleinerungsvorrichtung dazu eingerichtet, die Polymerfolienabschnitte relativ zum Schneidsieb zu bewegen. Beispielsweise kann eine Vorrichtung (wie beispielsweise ein Schaber, oder ein Rührarm) bereitgestellt sein, die die Folienabschnitte relativ zum Schneidsieb bewegt.

In einem Aspekt umfasst die Zerkleinerungsvorrichtung zumindest ein Rotationsmesser und optional zumindest ein stationäres Schneidwerkzeug. Eine Rotation des zumindest einen Rotationsmessers bewirkt eine grobe Zerkleinerung (Grobschnitt) der zugeführten ultrahochmolekularen Polymerfolienabschnitte. Ist zusätzlich zumindest ein stationäres Schneidwerkzeug vorgesehen, kann das zumindest eine Rotationsmesser mit dem zumindest einen stationären Schneidwerkzeug zusammenwirken, um die Schnittwirkung für die grobe Zerkleinerung zu erzielen.

Die grob zerkleinerten Polymerfolienabschnitte können anschließend (beispielsweise aufgrund der Rotationsbewegung des zumindest einen Rotationsmessers) relativ zum Schneidsieb bewegt werden und mittels des Schneidsiebs, insbesondere mittels der Schneidvorsprünge, weiter zerkleinert werden (Feinschnitt). Hierzu kann das Rotationsmesser von dem Schneidsieb beabstandet angeordnet werden. Der Abstand zwischen Rotationsmesser und Schneidsieb kann beispielsweise im Bereich von 0,8 mm bis 3 mm, oder im Bereich von 1 mm bis 2 mm, oder im Bereich von 1,2 mm bis 2,5 mm liegen.

Beispielsweise kann die Zerkleinerungsvorrichtung zumindest zwei, oder zumindest drei, oder zumindest vier Rotationsmesser umfassen. Weiterhin kann die Zerkleinerungsvorrichtung zumindest zwei, oder zumindest drei, oder zumindest vier stationäre Schneidwerkzeuge umfassen.

In einem Aspekt kann die Zerkleinerungsvorrichtung als Rotationsschneidmühle ausgebildet sein, oder eine Rotationsschneidmühle umfassen.

Eine Rotationsschneidmühle umfasst typischerweise ein Gehäuse, in dem zumindest ein Rotationsmesser drehbar angeordnet ist. Das zumindest eine Rotationsmesser wird an zumindest einem stationären Schneidwerkzeug vorbeigeführt, wodurch die Schnitt- bzw. Zerkleinerungswirkung erzielt wird. Die grob zerkleinerten Polymerfolienabschnitte werden durch das Schneidsieb abgeführt und dabei fein geschnitten.

Die Zerkleinerungsrate kann insbesondere über die Anzahl und Geometrie des/der Rotationsmesser beeinflusst werden (u.a. durch die Wahl einer Länge des Rotors / der Rotationsmesser und/oder eines Durchmessers eines Rotors des/der Rotationsmesser, und/oder dergleichen) sowie über eine Antriebsleistung der Zerkleinerungsvorrichtung.

Alternativ oder zusätzlich kann das zumindest eine Schneidsieb drehbar eingerichtet sein. Das Schneidsieb kann beispielsweise eine Schneidsiebtrommel oder eine Schneidsiebscheibe sein. Andere Formen sind ebenso möglich. Das Schneidsieb kann sich in diesem Aspekt also relativ zu den zugeführten Folienabschnitten, insbesondere relativ zu der Zuführvorrichtung, bewegen.

Die Sieböffnungen des Schneidsiebs können einen Äquivalentdurchmesser aufweisen, der im Bereich zwischen 0,5 mm und 1,5mm, oder im Bereich von 0,8 mm bis 1 mm liegt. Der Äquivalentdurchmesser gibt den Durchmesser des größten Kreises an, der in eine Sieböffnung eingeschrieben werden kann. Ein Schneidsieb kann einen Lochtyp aufweisen. D.h. alle Sieböffnungen haben im Wesentlichen die gleiche Form und Größe. In einem anderen Aspekt kann ein Schneidsieb unterschiedliche Lochtypen aufweisen. Beispielsweise können zumindest zwei Lochtypen vorhanden sein, wobei sich die Lochtypen in Lochform und/oder Lochgröße (Äquivalentdurchmesser) unterscheiden.

Es hat sich gezeigt, dass Sieböffnungen mit einem Äquivalentdurchmesser, der im Bereich zwischen 0,5 mm und 1,5mm liegt zu hochqualitativen Mahlgut führen. Bei einem Äquivalentdurchmesser von 0,8 mm konnte Mahlgut mit einer Partikelgröße im Bereich von 300 µm bis 800 µm (d50 = 560 µm, Schüttgewicht ca. 0,16 kg/l) hergestellt werden kann. Bei einem Äquivalentdurchmesser vom 0,5 mm lag die Partikelgröße des Mahlguts beispielsweise im Bereich von 250 bis 600 µm (d50 = 430 µm, Schüttgewicht 0,18 kg/l). Der d50-Wert kennzeichnet die Partikelgrößenverteilung. 50 % der Partikel sind größer und 50 % kleiner als dieser Wert. Neben der Lochgröße wird der Zerkleinerungsgrad auch durch die Geometrie etwaiger Rotationsmesser und/oder die Leistungsaufnahme der Zerkleinerungsvorrichtung bestimmt.

In einem weiteren Aspekt können die Sieböffnungen in Reihen angeordnet sein, wobei
- die Reihen einen Abstand v aufweisen, der in einem Bereich von 1 mm bis 3,6 mm, oder im Bereich von 1,5 mm bis 2,4 mm liegt, und/oder wobei
- die Sieböffnungen innerhalb der Reihen einen Abstand ts aufweisen, der in einem Bereich von 1,2 mm bis 4,2 mm, oder im Bereich von 1,8 mm bis 2,8 mm liegt, und/oder wobei
- die Sieböffnungen benachbarter Reihen um einen Abstand tr voneinander versetzt angeordnet sind, der in einem Bereich von 0,4 mm bis 2,1 mm, oder im Bereich von 0,6 mm bis 1,4 mm liegt.

Die Schneidvorsprünge können insbesondere durch Stanzen hergestellt sein.

Die Sieböffnungen können im Wesentlichen vollständig von den Schneidvorsprüngen überspannt werden. Das Mahlgut wird so mittels der Schneidvorsprünge in bzw. durch die Sieböffnungen gefördert. Dies verhindert, dass sich das Mahlgut in dem Schneidsieb festsetzt und übermäßigen Scherbeanspruchungen ausgesetzt wird.

Alternativ können die Schneidvorsprünge die Sieböffnungen nur teilweise überspannen. Die Sieböffnungen sind also vergrößert. Dies kann erreicht werden, indem beim Stanzen ein erster Teil der späteren Sieböffnung ausgestanzt wird und ein zweiter Teil zum Schneidvorsprung umgeformt wird. Somit ergibt sich eine vergrößerte Sieböffnung, die die Gefahr des Zusetzens des Schneidsiebs weiter reduziert.

Jeder der Schneidvorsprünge (oder ein Teil davon) kann eine Schneidkante umfassen. Die Schneidkante greift mit den Produktionsabfällen ein und ist so am Schneidvorsprung angeordnet, dass sie in Bewegungs- (bzw. Rotationsrichtung) zeigt. Die Schneidkante kann eine gestanzte Schneidkante sein, die einen Stanzgrat aufweist. Dieser Stanzgrat erhöht die Schneidwirkung des Schneidsiebs. Zudem kann die Schneidkante eine bearbeitete Schneidkante sein, die beispielsweise geschliffen (z.B. Lasergeschliffen, oder mechanisch geschliffen) ist, um die Schneidwirkung weiter zu erhöhen.

Eine der Schneidkante gegenüberliegende Seite der Schneidvorsprünge kann geschlossen sein. Zu zerkleinernde Folienabschnitte können so von der Schneidkante geschnitten werden. Die zerkleinerten Folienabschnitte (das Mahlgut) wird von der geschlossenen Seite des Schneidvorsprungs aufgenommen und durch die zugehörige Sieböffnung geleitet.

Das System kann weiterhin zumindest eine Fördervorrichtung umfassen, die dazu eingerichtet ist zerkleinerte Polymerfolienabschnitte (Mahlgut) von der Zerkleinerungsvorrichtung abzuführen. Insbesondere kann die Fördervorrichtung ein Fördergebläse sein, welches einen Luftstrom erzeugt, der die zerkleinerten Polymerfolienabschnitte von der Zerkleinerungsvorrichtung wegtransportiert.

Im Anschluss können die zerkleinerten Polymerfolienabschnitte einer Abscheidevorrichtung zugeführt werden (z.B. ein Fliehkraftabscheider), welche die zerkleinerten Polymerfolienabschnitte vom Luftstrom separiert. Die separierten, zerkleinerten Polymerfolienabschnitte können anschließend verpackt und eingelagert werden (z.B. als Sackware), oder die zerkleinerten Polymerfolienabschnitte können erneut einem Extruder zugeführt werden.

Entsprechend kann das System weiterhin eine Absackvorrichtung umfassen, die dazu eingerichtet ist, zerkleinerte Polymerfolienabschnitte für eine Lagerung oder Zwischenlagerung zu verpacken.

In einem weiteren Aspekt kann das System eine Dosiervorrichtung umfassen, die dazu eingerichtet ist zerkleinerte Polymerfolienabschnitte zu dosieren und einem Extruder zuzuführen. Der Extruder kann Teil des Systems sein. Der Extruder kann die zerkleinerten Polymerfolienabschnitte erneut zusammen mit Öl, insbesondere Weißöl, extrudieren, um eine Polymerfolie herzustellen. Der Anteil der zerkleinerten Folienabschnitte (d.h. des Rezyklats) kann im Bereich von 1 Gew% bis 50 Gew% des Feststoffanteils der extrudierten Folie liegen. Beispielsweise kann der Anteil der zerkleinerten Folienabschnitte wenigstens 5 Gew% des Feststoffanteils der extrudierten Folie, oder wenigstens 10 Gew% des Feststoffanteils der extrudierten Folie, oder wenigstens 15 Gew% des Feststoffanteils der extrudierten Folie, oder wenigstens 20 Gew% des Feststoffanteils der extrudierten Folie betragen. Anschließend kann die extrudierte Folie in einem Längsreckwerk und/oder einem Querreckwerk oder einem Simultanreckverfahren versteckt werden.

Die Zuführvorrichtung kann weiterhin dazu eingerichtet sein, Polymerfolienabschnitte, insbesondere (trockene) Randabschnitte, automatisiert aufzugreifen und der Zerkleinerungsvorrichtung zuzuführen. Somit entsteht für die Polymerfolienabschnitte ein Kreislauf und die Entstehung von Produktionsabfällen, die thermisch verwertet oder deponiert werden müssen, kann signifikant reduziert werden.

Die Aufgabe wird weiterhin durch ein Verfahren zur Wiederaufbereitung von ultrahochmolekularen Polymerfolienabschnitten, insbesondere Batterieseparator-, BSF, -Folienabschnitten, vorzugsweise unter Verwendung des zuvor beschriebenen Systems, gelöst.

Das Verfahren umfasst das Folgende:
- Bereitstellen zumindest eines ultrahochmolekularen Polymerfolienabschnitts. Die Polymerfolienabschnitte sind insbesondere sogenannte trockene Polymerfolienabschnitte, d.h. Polymerfolienabschnitte, die im Wesentlichen frei von Öl, insbesondere Weißöl sind.
- Zuführen des Polymerfolienabschnitts an eine Zerkleinerungsvorrichtung.
- Zerkleinern des zugeführten Polymerfolienabschnitts (2) mittels der Zerkleinerungsvorrichtung. Die Zerkleinerungsvorrichtung umfasst zumindest ein Schneidsieb. Das Schneidsieb umfasst eine Vielzahl von Sieböffnungen und eine Vielzahl von Schneidvorsprüngen. Zumindest ein Schneidvorsprung überspannt eine ihm zugeordnete Sieböffnung. Im Übrigen kann das Schneidsieb wie oben beschrieben ausgestaltet sein.

Das Zerkleinern umfasst das Erzeugen einer Relativbewegung zwischen dem Schneidsieb und dem zugeführten Polymerfolienabschnitt, d.h. es kann der Polymerfolienabschnitt relativ zum Schneidsieb bewegt werden (z.B. mittels eines Schabers oder Rührarms) und/oder das Schneidsieb kann relativ zum Polymerfolienabschnitt bewegt werden.

Weiterhin kann das Zerkleinern des zugeführten Polymerfolienabschnitts ein Zerkleinern mittels zumindest eines Rotationsmessers (und optional mittels eines stationären Schneidewerkzeugs) umfassen, wobei das Zerkleinern mittels des Rotationsmessers vor dem Zerkleinern mittels des Schneidsiebs erfolgt. Das Zerkleinern des zugeführten Polymerfolienabschnitts mittels zumindest eines Rotationsmessers kann ein Grobschnitt sein, während das Zerkleinern des zugeführten Polymerfolienabschnitts (bzw. der bereits grob zerkleinerten Polymerfolienabschnitte) ein Feinschnitt sein kann.

Das Verfahren kann weiterhin das Regeln einer Einzugsgeschwindigkeit und/oder Einzugsmenge der Zuführvorrichtung umfassen und/oder das Regeln einer Leistung der Zerkleinerungsvorrichtung. Beispielsweise kann so die Drehgeschwindigkeit des Rotationsmessers annähernd konstant gehalten werden.

Insbesondere können die Zuführvorrichtung und/oder die Zerkleinerungsvorrichtung so gesteuert und/oder geregelt werden, dass die zerkleinerten Polymerfolienabschnitte (d.h. das Mahlgut) eine Partikelgröße im Bereich von 300 µm bis 800 µm, oder im Bereich von 250 µm bis 600 µm aufweisen. Die Polymerfolienabschnitte können beispielsweise eine Foliendicke im Bereich von 5 µm bis 200 µm, oder im Bereich von 8 µm bis 100 µm oder im Bereich von 10 bis 30 µm aufweisen. Es hat sich gezeigt, dass sich Mahlgut in dieser Partikelgröße ohne Qualitätseinbußen als Rezyklat bei der Herstellung von ultrahochmolekularen Polymerfolien, insbesondere BSF-Folien verwenden lässt.

Weiterhin kann das Verfahren das Verpacken der zerkleinerten Folienabschnitte (für die Lagerung und/oder Zwischenlagerung) und/oder das Zuführen der zerkleinerten Folienabschnitte an einen Extruder zur Folienherstellung umfassen. Insbesondere kann der Anteil des Rezyklats (d.h. des Mahlguts) bei der der Herstellung von ultrahochmolekularen Polymerfolien 1 Gew% bis 50 Gew% des Feststoffanteils der extrudierten Folie betragen.

### Kurzbeschreibung der Figuren

Die beigefügten Figuren zeigen Aspekte der vorliegenden Erfindung. Insbesondere zeigt
- Fig. 1: zeigt ein Schema eines typischen Herstellungsverfahrens für poröse, ultrahochmolekulare Polymerfolien, wie BSF-Folien;
- Fig. 2: zeigt ein Schema eines Systems zur Off-Line Wideraufbereitung von Produktionsabfällen;
- Fig. 3: zeigt ein Schema eines Systems zur In-Line Wiederaufbereitung von Produktionsabfällen;
- Fig. 4: zeigt ein Schema eines alternativen Systems zur In-Line Wiederaufbereitung von Produktionsabfällen;
- Fig. 5: zeigt ein Schema eines alternativen Systems zur In-Line Wiederaufbereitung von Produktionsabfällen;
- Figs. 6A, B: zeigen schematische Ansichten von Systemen zur Wiederaufbereitung von ultrahochmolekularen Polymerfolien Produktionsabfällen;
- Figs. 7A, B: zeigen Schnittansichten unterschiedlicher Schneidsiebe zur Wiederaufbereitung von Produktionsabfällen;
- Figs. 8A-C: zeigen unterschiedliche Lochmuster für Schneidsiebe zur Wiederaufbereitung von Produktionsabfällen, und
- Fig. 9: zeigt unterschiedlich geformte Schneidvorsprünge.

### Ausführliche Beschreibung der Figuren

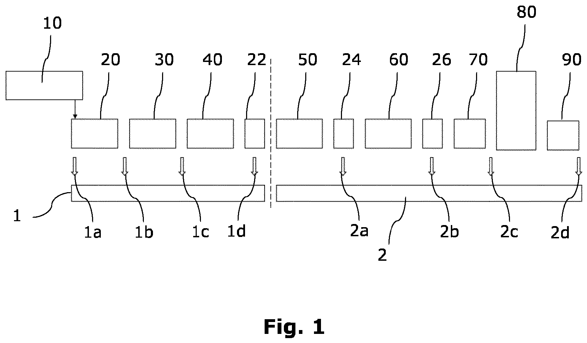

Fig. 1 zeigt ein Schema eines typischen Herstellungsverfahrens für poröse, ultrahochmolekulare Polymerfolien, wie BSF-Folien. In einem Extruder 10 wird pulverförmiges ultrahochmolekulares Polymer, wie beispielsweise UHMWPE, mit Öl, insbesondere Weißöl vermischt.

Beispielsweise kann das pulverförmige ultrahochmolekulare Polymer über zumindest eine Dosiervorrichtung (wie beispielsweise eine Differential-dosierwaage) in den Extruder dosiert werden. Zudem kann das Öl (insbesondere Weißöl) in den Extruder, vorzugsweise an unterschiedlichen Stellen im Bereich der Extruderschnecke(n) dosiert eingespritzt werden, wodurch das pulverförmige ultrahochmolekulare Polymer nach und nach mit dem Öl vermischt wird.

Alternativ kann das pulverförmige ultrahochmolekulare Polymer in einem vorgelagerten Verfahrensschritt mit dem Öl vermischt und zu einer sogenannten "Slurry" verarbeitet werden. Diese Slurry kann dann in den Extruder gepumpt werden.

Das pulverförmige ultrahochmolekulare Polymer kann auch pulverartiges Mahlgut umfassen, dass mittels der nachfolgend beschriebenen Systeme zur Wiederaufbereitung von Produktionsabfällen bzw. Folienabschnitten hergestellt wurde.

Das Polymer-Öl-Gemisch wird vom Extruder 10 zu einer (hochviskosen) Schmelze verarbeitet und extrudiert und über einen Folienabzug 20 einer Längsreckvorrichtung 30 zugeführt. Die extrudierte Folie wird hier in Längsrichtung (MD-Richtung) verstreckt. Die Pfeile 1a, 1b und 1c deuten an, dass hier Produktionsabfälle, insbesondere Anfahrabfälle, entstehen können. Die Anfahrabfälle entstehen u.a. beim Spülen des Extruders, beim ersten Anfahren sowie bei Produktionsunterbrechungen (z.B. bei einem Folienabriss). Die entsprechenden Folienabschnitte (Anfahrabschnitte, Abrissabschnitte) können gesammelt werden.

Nach der Längsreckvorrichtung 30 kann die in Längsrichtung verstreckte Folie einer Querreckvorrichtung 40 zugeführt und über einen Folienabzug 22 abgezogen werden. Es versteht sich, dass die Quer- und Längsverstreckung auch simultan erfolgen kann.

Anschließend kann die Folie besäumt werden. Beim Besäumen wird ein nasser Randstreifen, d.h. ein Randstreifen der Folie, der noch zumindest 50 Gew.% Öl (insbesondere Weißöl) enthält, abgeschnitten. Die nassen Produktionsabfälle 1, also Produktionsabfälle, bzw. Folienabschnitte, die noch zumindest 50 Gew.% Öl (insbesondere Weißöl) enthalten können anschließend gesammelt werden.

Die noch nasse Folie wird anschließend durch ein Auswaschbad 50 geleitet und das Öl (insbesondere Weißöl) mittels eines Lösungsmittels (beispielsweise Dichlormethan (DCM) oder Hexan) ausgewaschen. Anschließend liegt der Ölanteil vorzugsweise unter 5 Gew% der Folienabschnitte.

Nach einer optionalen Trocknung der Folie, bei der das Lösungsmittel entfernt wird, kann die nun trockene Folie über einen Folienabzug 24 einer weiteren Querreckvorrichtung 60 zugeführt werden. Hier kann die Folie weiter querverstreckt und/oder relaxiert werden. Über einen Folienabzug 26 kann die weiter querverstreckte und/oder relaxierte Folie in einer Wickelvorrichtung 70 aufgewickelt und schließlich in einem Lager 80 gelagert werden. Die aufgewickelte Folie kann über eine Schneidvorrichtung 90 auf ein gewünschtes Maß (Länge und/oder Breite) geschnitten werden.

Nach dem Auswaschbad fallen sogenannte trockene Produktionsabfälle 2 an. Diese Produktionsabfälle 2 bzw. Folienabschnitte umfassen Randstreifen 2a, 2b, die durch Besäumen der Folie nach dem Auswaschbad und/oder nach der weiteren Querverstreckung von der eigentlichen Folie abgetrennt werden, sowie Verschnitt und Ausschuss 2c, 2d.

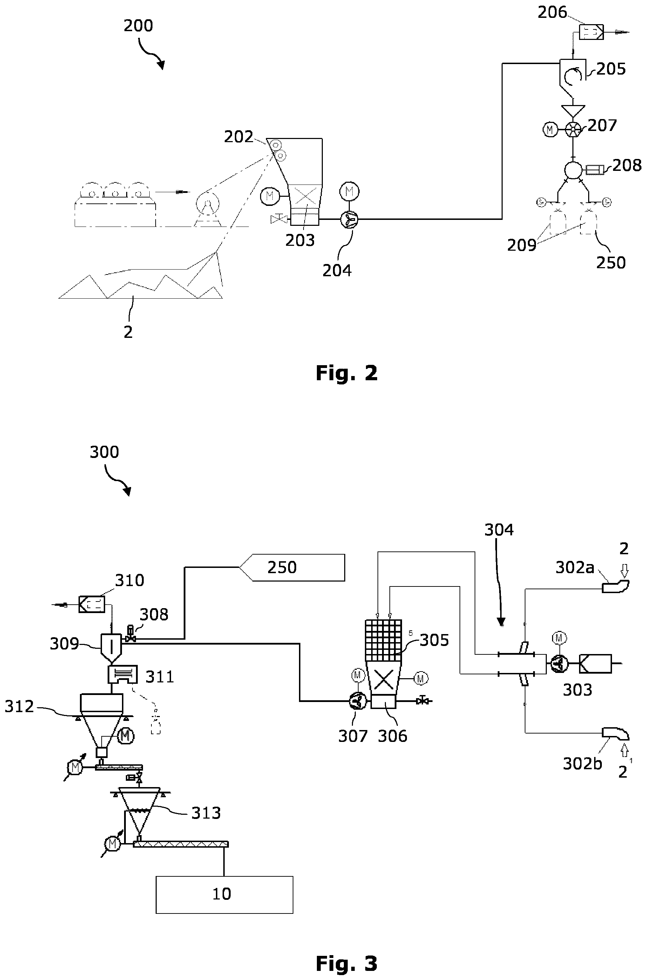

Fig. 2 zeigt ein Schema eines Systems 200 zur Off-Line Wideraufbereitung von Produktionsabfällen 2, insbesondere trockenen Produktionsabfällen. Die Produktionsabfälle 2 werden über eine Zuführvorrichtung 202 an eine Zerkleinerungsvorrichtung 203 zugeführt und dort zerkleinert. Die Zuführvorrichtung 202 kann einen Walzeneinzug umfassen, welcher insbesondere dazu eingerichtet sein kann eine Einzugsgeschwindigkeit zu regeln. Somit kann die Menge an Produktionsabfällen 2, die der Zerkleinerungsvorrichtung 203 zugeführt werden geregelt werden.

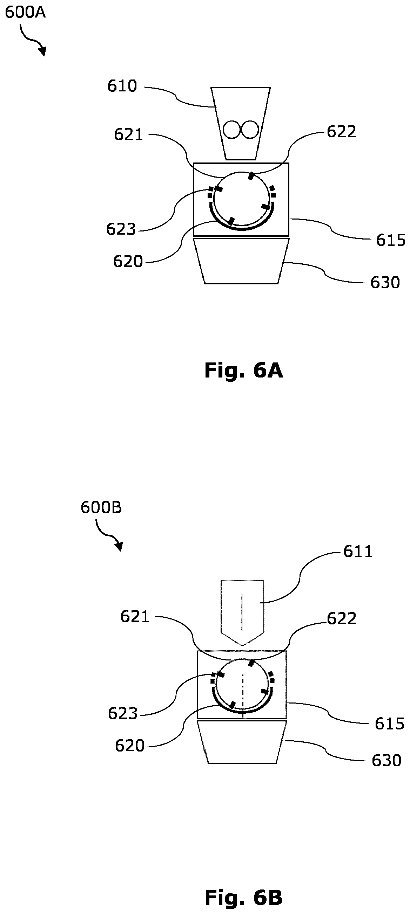

Die Zerkleinerungsvorrichtung 203 ist insbesondere eine Schneidmühle (z.B. eine Rotationsschneidmühle), welche zumindest ein Schneidsieb umfasst. Das Schneidsieb kann beispielsweise eine Lochung mit einem Äquivalentdurchmesser im Bereich von 0,5 bis 1,5 mm, insbesondere im Bereich von 0,8 bis 1 mm aufweisen. Der Äquivalentdurchmesser gibt den Durchmesser des größten Kreises an, der in eine Sieböffnung eingeschrieben werden kann. Insbesondere kann das Schneidsieb wie in den Figuren 6A bis 8C dargestellt ausgebildet sein.

Es hat sich gezeigt, dass bei einer Lochung mit einem Äquivalentdurchmesser von 0,8 mm Mahlgut mit einer Partikelgröße im Bereich von 300 µm bis 800 µm (d50 = 560 µm, Schüttgewicht ca. 0,16 kg/l) hergestellt werden kann. Bei einer Lochung mit einem Äquivalentdurchmesser vom 0,5 mm lag die Partikelgröße des Mahlguts beispielsweise im Bereich von 250 bis 600 µm (d50 = 430 µm, Schüttgewicht 0,18 kg/l). Der d50-Wert kennzeichnet die Partikelgrößenverteilung. 50 % der Partikel sind größer und 50 % kleiner als dieser Wert.

Das Mahlgut kann über eine Fördervorrichtung 204, wie beispielsweise ein Mahlgutfördergebläse zu einer Abscheidevorrichtung 205 transportiert werden. Die Abscheidevorrichtung 205 umfasst beispielsweise einen Fliehkraftabscheider, in welchem das Mahlgut vom Förderluftstrom abgeschieden wird. Der Förderluftstrom bzw. Abluft der Fördervorrichtung kann in einem Filter 206 gefiltert werden, um beispielsweise Staub / Feinstaub auszufiltern.

Über eine Schleuse 207 und eine Weiche 208 kann das Mahlgut an eine Absackvorrichtung 209 übergeben und dort verpackt werden. Beispielsweise können dort Säcke, wie beispielsweise BigPacks, mit dem Mahlgut (d.h. dem Rezyklat 250) gefüllt und gelagert werden. Das so gewonnene Mahlgut kann anschließend dem Extruder direkt als zusätzlicher pulverartiger Feststoff oder als Teil eines Slurry) zugeführt und somit recycliert werden. Es zeigt sich, dass das so gewonnene Mahlgut im Extruder gut mit dem Weißöl durchmischt und in Lösung gebracht werden kann, sodass trotz des Rezyklatanteils (beispielsweise 1-50 Gew% des Feststoffanteils der Folie) hochwertige poröse, ultrahochmolekularen Polymerfolien hergestellt werden können.

Fig. 3 zeigt ein Schema eines Systems 300 zur In-Line Wideraufbereitung von Produktionsabfällen 2. Produktionsabfälle, wie Randstreifen, insbesondere trockene Randstreifen, die bei der Herstellung von ultrahochmolekularen Polymerfolien anfallen, werden über eine linke und rechte Randstreifenaufnahme 302a, 302b automatisiert zu einer Zerkleinerungsvorrichtung 306 geführt. Dies kann über eine Fördereinrichtung 303 erfolgen.

Die Fördereinrichtung 303 kann als Absaugeinrichtung ausgebildet sein. Randstreifen, die von der linken bzw. rechten Randstreifenaufnahme 302a, 302b (beispielsweise Ansaugtrichter) aufgenommen wurden, werden durch ein Treibluftgebläse an einen oder mehrere Injektoren zugeführt. Die Injektoren können Teil einer Zuführvorrichtung 304 sein. Über die Injektoren werden die Produktionsabfälle 2 angesaugt und dann pneumatisch in Rohrleitungen zu einer Abscheidevorrichtung 305 (beispielsweise ein Flachabscheider) transportiert, die hier der Zerkleinerungsvorrichtung 306 vorgeschalten ist. In der Abscheidevorrichtung 305 werden die Produktionsabfälle 2 von dem von der Fördervorrichtung 303 erzeugten Luftstrom abgeschieden.

Nach dem Durchlaufen der Zerkleinerungsvorrichtung 306 liegen die Produktionsabfälle 2 als Mahlgut vor. Die Zerkleinerungsvorrichtung 306 ist insbesondere eine Schneidmühle (z.B. eine Rotationsschneidmühle), welche zumindest ein Schneidsieb umfasst. Insbesondere kann das Schneidsieb wie in den Figuren 6A bis 8C dargestellt ausgebildet sein.

Das Mahlgut wird anschließend von einer weiteren Fördervorrichtung 307 (beispielsweise ein Radialgebläse) über eine Abscheidevorrichtung 309 und einer optionalen Abscheidevorrichtung 311 an einen Nachfüllbehälter 312 bereitgestellt. In der Abscheidevorrichtung 309 (beispielsweise eine Fliehkraftabscheidevorrichtung) wird das Mahlgut von dem Förderluftstrom getrennt. In der Abscheidevorrichtung 311 können beispielsweise metallische Komponenten aus dem Mahlgut abgeschieden werden.

Über eine Absperrvorrichtung 308 kann dem inline-erzeugten Mahlgut off-line-erzeugtes Mahlgut 250 zugeführt und so der Gesamtanteil an Mahlgut/Rezyklat am Feststoffanteil in der extrudierten Folie erhöht werden. Über eine Dosiervorrichtung 313 (wie beispielsweise eine (Differential-)dosierwaage) kann das Mahlgut an einen Extruder 10 bereitgestellt werden. Die Absperrvorrichtung 308 und/oder die Dosiervorrichtung 313 können beispielsweise so gesteuert werden, dass sich das Verhältnis von inline-erzeugtem Mahlgut und offline-erzeugtem Mahlgut einstellen lässt. So ist es möglich ausschließlich inline-erzeugtes Mahlgut, ausschließlich offlineerzeugtes Mahlgut, oder Mischungen aus inline-erzeugtem Mahlgut und offline-erzeugtem an den Extruder bereitzustellen.

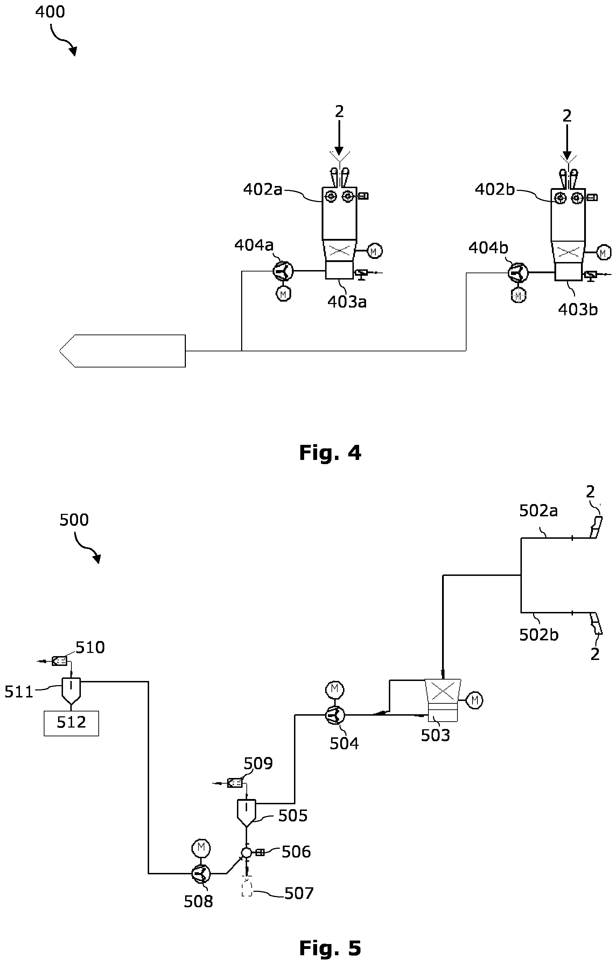

Fig. 4 zeigt ein Schema eines Systems 400 zur Wideraufbereitung von Produktionsabfällen 2. Hier werden die Produktionsabfällen 2, beispielsweise ein (trockener) linker und rechter Randstreifen, die bei der Herstellung von ultrahochmolekularen Polymer-Folien anfallen je über eine Zuführvorrichtung (z.B. Ansaugtrichter) 402a, 402b an eine Zerkleinerungsvorrichtung 403a, 403b bereitgestellt. Die Zerkleinerungsvorrichtung 403a, 403b ist insbesondere eine Schneidmühle (z.B. eine Rotationsschneidmühle), welche zumindest ein Schneidsieb umfasst. Insbesondere kann das Schneidsieb wie in den Figuren 6A bis 8C dargestellt ausgebildet sein. Für jeden Randstreifen (links, rechts) ist mithin eine entsprechende Zuführvorrichtung 402a, 402b und Zerkleinerungsvorrichtung 403a, 403b vorgesehen.

Die Zuführvorrichtungen 402a, 402b und Zerkleinerungsvorrichtungen 403a, 403b können wie vorstehend beschrieben ausgeführt sein. Über Fördervorrichtungen (insbesondere Fördergebläse) wird das in den Zerkleinerungsvorrichtungen 403a, 403b erzeugte Mahlgut zur Weiterverarbeitung (In-Line, wie z.B. in Fig. 3 und 5 dargestellt, oder Off-Line wie z.B. in Fig. 2 dargestellt) transportiert.

Fig. 5 zeigt ein Schema eines Systems 500 zur In-Line Wiederaufbereitung von Produktionsabfällen 2. Im Unterschied zu dem in Fig. 3 gezeigten Systems werden die Produktionsabfälle 2, insbesondere (trockene) Randstreifen über eine Zerkleinerungsvorrichtung 503 (z.B. eine (Rotations-)Schneidmühle) angesaugt. Über eine Fördervorrichtung 504 (z.B. ein Fördergebläse) gelangt das erzeugte Mahlgut in eine Abscheidevorrichtung 505 (z.B. ein Fliehkraftabscheider), wobei der Förderluftstrom einem Filter 509 zugeführt werden kann.

Über eine Weiche 506 kann das Mahlgut einer Absackvorrichtung 507 zugeführt und dort für die (Zwischen-)Lagerung verpackt werden. Ebenso kann das Mahlgut über eine weitere Fördervorrichtung 508 (z.B. ein Fördergebläse) und eine weitere Abscheidevorrichtung 511 (z.B. ein Fliehkraftabscheider) an eine Dosiervorrichtung 512 (wie beispielsweise eine (Differential-)dosierwaage) und sodann an einen Extruder breitgestellt werden. Ein Förderluftstrom der Fördervorrichtung 508 kann einem Filter 510 zugeführt werden.

Die Figuren 6A und 6B zeigen schematische Ansichten von Systemen 600A bzw. 600B zur Wiederaufbereitung von ultrahochmolekularen Polymerfolien Produktionsabfällen. Die Produktionsabfälle, insbesondere trockene Produktionsabfälle werden über eine Zuführvorrichtung an eine Zerkleinerungsvorrichtung bereitgestellt. Wie in Fig 6A gezeigt ist, kann die Zuführvorrichtung 610 beispielsweise einen Walzeneinzug umfassen, der steuer- oder regelbar sein kann, um eine gewünschte Menge an Produktionsabfällen pro Zeiteinheit an die Zerkleinerungsvorrichtung bereitzustellen. In einem anderen Fall, gezeigt in Fig. 6B, kann die Zuführvorrichtung 611 als Fliehkraftabscheider, in Form eines Zyklons, oder als Flachabscheider ausgeführt sein.

In Fig. 6A und Fig. 6B umfasst die Zerkleinerungsvorrichtung eine Rotationsschneidmühle 615. Die Rotationsschneidmühle 615 umfasst einen Rotor 621. Der Rotor ist drehbar eingerichtet. Auf dem Rotor 621 kann zumindest ein Rotationsmesser 622 angeordnet sein. Beispielsweise können auf dem Rotor 621 zumindest zwei, oder zumindest drei oder zumindest vier, oder zumindest acht Rotationsmesser 622 angeordnet sein. Die Rotationsmesser können gleichmäßig um den Umfang des Rotors 621 verteilt angeordnet sein.

Weiterhin umfasst die Rotationsschneidmühle 615 ein Gehäuse, in welchem stationäre Schneidwerkzeuge 623 angeordnet sind. Beispielsweise kann die Rotationsschneidmühle 615 zumindest zwei, oder zumindest drei oder zumindest vier, oder zumindest acht stationäre Schneidwerkzeuge 623 umfassen.

Unterhalb des Rotors 621 ist ein Siebkorb angeordnet, welcher zumindest ein Schneidsieb 620 umfasst. Das zumindest eine Schneidsieb kann den Rotor 621 zumindest in einem Bereich von 90° bis 180° umfassen.

Die Produktionsabfälle werden über die Zuführeinrichtung 610, 611 der Rotationsschneidmühle 615 zugeführt und anschließend zu Mahlgut zerkleinert. Produktionsabfälle, die von den Rotationsmessern 622 und den stationären Schneidwerkzeugen 623 grob zerkleinert/geschnitten wurden, werden anschließend durch das Schneidsieb 620 geleitet und dabei weiter zu Mahlgut zerkleinert (Feinschnitt).

Beim Feinschnitt wird das grob geschnittene Material von den Rotationsmessern 622 tangential über die Schneidvorsprünge des Schneidsiebs 620 bewegt. Die Produktionsabfälle verweilen solange in der Mühle, bis eine ausreichende Zerkleinerung erfolgt ist. Sodann kann das Mahlgut das Schneidsieb 620 passieren. So kann eine ausreichend geringe Partikelgröße sichergestellt werden. Das Mahlgut kann unterhalb des Schneidsiebs 620 von einer Absaugwanne aufgenommen und zur weiteren Verarbeitung (inline oder offline) abtransportiert werden.

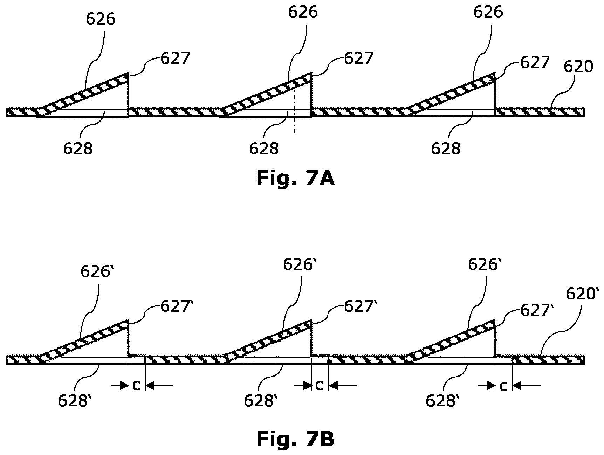

Die Figuren 7A und 7B zeigen Schnittansichten unterschiedlicher Schneidsiebe 620, 620', wie sie beispielsweise in den in Fig. 6A und 6B dargestellten Rotationsschneidmühlen zum Einsatz kommen. Das Schneidsieb 620 umfasst eine Vielzahl von Schneidvorsprüngen 626, die insbesondere in das Schneidsieb 620 eingestanzt sind. Die Schneidvorsprünge 626 überspannen die Sieböffnungen 628 zumindest teilweise. Die Schneidvorsprünge 626 weisen eine Schneidkante 627 auf, die mit den Produktionsabfällen eingreift und die Produktionsabfälle zu Mahlgut zerkleinert.

Eine der Schneidkante 627 gegenüberliegende Seite der Schneidvorsprünge 626 kann geschlossen sein. Zu zerkleinernde Folienabschnitte können so von der Schneidkante 627 geschnitten werden. Die zerkleinerten Folienabschnitte (das Mahlgut) können dann von der geschlossenen Seite des Schneidvorsprungs aufgenommen und durch die zugehörige Sieböffnung 628 geleitet werden.

Die Schneidkante 627 kann eine gestanzte Schneidkante sein, die einen Stanzgrat aufweist. Dieser Stanzgrat erhöht die Schneidwirkung des Schneidsiebs. Zudem kann die Schneidkante 627 eine bearbeitete Schneidkante sein, die beispielsweise geschliffen (z.B. Lasergeschliffen, oder mechanisch geschliffen) ist, um die Schneidwirkung weiter zu erhöhen. Durch das Stanzen der Schneidvorsprünge 626 bilden sich Sieböffnungen 628, über die das Mahlgut abgeführt werden kann.

Das in Fig. 7B gezeigte Schneidsieb 620' ist im Wesentlichen so aufgebaut, wie das in Fig. 7A gezeigte Schneidsieb. Der Unterschied ist hier, dass die Sieböffnungen 628' gegenüber den Sieböffnungen 628 um einen Abschnitt c vergrößert sind. Diese Abschnitt c kann beim Stanzen der Schneidvorsprünge 626' mit ausgestanzt werden, oder in einem separaten Schritt. Die vergrößerten Sieböffnungen 628' führen zu einer höheren Toleranz des Schneidsiebs gegenüber verstopfen.

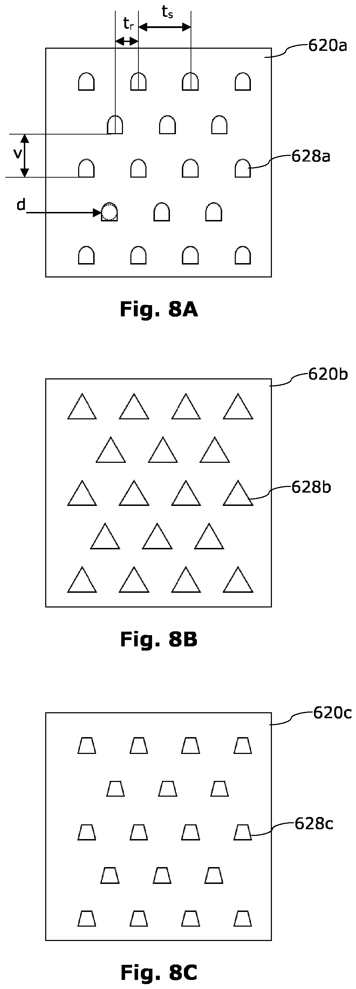

Die Figuren 8A bis 8C zeigen exemplarische Lochmuster eines Schneidsiebs, wobei sich die Lochform und damit die Form der entsprechenden Schneidvorsprünge unterscheidet. Fig. 8A zeigt eine bogenförmige Lochform (und entsprechende bogenförmige Schneidvorsprünge). Fig. 8B zeigt eine dreieckige Lochform (und entsprechende dreieckige Schneidvorsprünge). Fig. 8C zeigt eine trapezförmige Lochform (und entsprechende trapezförmige Schneidvorsprünge). Zudem weisen die Schneidsiebe eine Lochung mit einem Äquivalentdurchmesser d im Bereich von 0,5 mm bis 1,5 mm auf. Die Sieböffnungen 626a, 626b, 626c sind in Reihen angeordnet. Die Reihen weisen einen Abstand v auf, der insbesondere in einem Bereich von 1 mm bis 3,6 mm, oder im Bereich von 1,5 mm bis 2,4 mm liegt. Innerhalb der Reihen weisen die Sieböffnungen einen Abstand ts auf, der insbesondere in einem Bereich von 2 mm bis 4,2 mm, oder im Bereich von 1,8 mm bis 2,8 mm liegt. Weiterhin können die einzelnen Sieböffnungen benachbarter Reihen um einen Abstand tr voneinander versetzt angeordnet sein. Der Abstand tr liegt beispielsweise in einem Bereich von 0,4 mm bis 2,1 mm, oder im Bereich von 0,6 mm bis 1,4 mm.

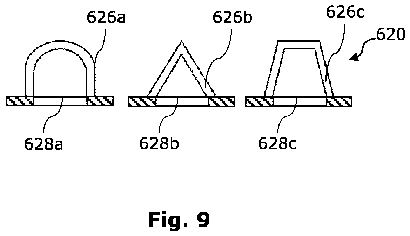

Wie in Figur 9 gezeigt ist, überspannen die Schneidvorsprünge 626a, 626b, 626c jeweils eine zugeordnete Sieböffnung 628a, 628b, 628c zumindest teilweise. Die Schneidvorsprünge können je nach Stanzung unterschiedlich geformt sein. Der Schneidvorsprung 626a ist beispielsweise bogenförmig, der Schneidvorsprung 626b dreieckig und der Schneidvorsprung 626c trapezförmig geformt.

### Bezugszeichenliste

- 1: nasse Produktionsabfälle
- 1a: Anfahrabfall (nass)
- 1b: Anfahrabfall (nass)
- 1c: Anfahrabfall (nass)
- 1d: Randstreifen (nass)
- 2: trockene Produktionsabfälle (Polymerfolienabschnitt)
- 2a: Randstreifen (trocken)
- 2b: Randstreifen (trocken)
- 2c: Verschnitt/Ausschuss (trocken)
- 2d: Randstreifen/Ausschuss (trocken)
- 10: Extruder
- 20: Folienabzug
- 22, 24, 26: Folienabzug
- 30: Längsreckvorrichtung
- 40: Querreckvorrichtung
- 50: Auswaschbad
- 60: weitere Querreckvorrichtung
- 70: Wickler
- 80: Lager
- 90: Schneidvorrichtung
- 200: System
- 202: Zuführvorrichtung
- 203: Zerkleinerungsvorrichtung
- 204: Gebläse
- 205: Abscheidevorrichtung
- 206: Filter
- 207: Schleuse
- 208: Weiche
- 209: Absackvorrichtung
- 250: Rezyklat
- 300: System
- 302: Randstreifenaufnahme
- 303: Fördervorrichtung
- 304: Zuführvorrichtung
- 305: Abscheidevorrichtung
- 306: Zerkleinerungsvorrichtung
- 307: Fördervorrichtung
- 308: Absperrvorrichtung
- 309: Abscheidevorrichtung
- 310: Filter
- 311: Abscheidevorrichtung (Metall)
- 312: Nachfüllbehälter
- 313: Dosiervorrichtung
- 400: System
- 402a,b: Zuführvorrichtung
- 403a, b: Zerkleinerungsvorrichtung
- 404a,b: Fördervorrichtung
- 500: System
- 502a, b: Zuführvorrichtung
- 503: Zerkleinerungsvorrichtung
- 504: Fördervorrichtung
- 505: Abscheidevorrichtung
- 506: Weiche
- 507: Absackvorrichtung
- 508: Fördervorrichtung
- 509, 510: Filter
- 511: Abscheidevorrichtung
- 512: Dosiervorrichtung
- 600A, B: System
- 610: Zuführvorrichtung, mechanisch (Walzeneinzug)
- 611: Zuführeinrichtung, pneumatisch (Fliehkraft-, Flach- oder Gitterabscheider)
- 615: Rotationsschneidmühle
- 620: Schneidsieb
- 621: Rotor
- 622: Rotationsmesser
- 623: stationäres Schneidwerkzeug
- 626: Schneidvorsprung
- 627: Schneidkante
- 628: Sieböffnung
- 630: Absaugwanne
- d: Äquivalentdurchmesser
- v: Vorschub
- tₛ: Lochteilung
- tᵣ: Versatz

## Patentansprüche

1. System (200, 300, 400, 500, 600A, 600B) zur Wiederaufbereitung von ultrahochmolekularen Polymerfolienabschnitten (2), insbesondere von Membranfolien, wie Batterieseparator-, BSF, -Folien, wobei das System folgendes umfasst:
eine Zuführvorrichtung (202, 304, 402, 502); und
eine Zerkleinerungsvorrichtung (203, 306, 403a, 403b, 503), wobei
die Zuführvorrichtung (202, 304, 402, 502) dazu eingerichtet ist einen ultrahochmolekularen Polymerfolienabschnitt (2), an die Zerkleinerungsvorrichtung (203, 306, 403a, 403b, 503) bereitzustellen, und wobei
die Zerkleinerungsvorrichtung (203, 306, 403a, 403b, 503) zumindest ein Schneidsieb umfasst, wobei das Schneidsieb (624) eine Vielzahl von Sieböffnungen (628) und eine Vielzahl von Schneidvorsprüngen (626) umfasst, wobei zumindest ein Schneidvorsprung (626) eine ihm zugeordnete Sieböffnung (628) überspannt, wobei
die Zerkleinerungsvorrichtung (203, 306, 403a, 403b, 503) dazu eingerichtet ist eine Relativbewegung zwischen dem Schneidsieb (624) und dem zugeführten Polymerfolienabschnitt (2) zu erzeugen, um den Polymerfolienabschnitt zu zerkleinern.

2. System nach Anspruch 1, wobei das System weiterhin eine Regelungsvorrichtung umfasst, und wobei die Regelungsvorrichtung dazu eingerichtet ist eine Einzugsgeschwindigkeit und/oder Einzugsmenge der Zuführvorrichtung (202, 304, 402, 502) zu regeln.

3. System nach Anspruch 1 oder 2, wobei
die Zerkleinerungsvorrichtung (203, 306, 403a, 403b, 503) dazu eingerichtet ist, die Polymerfolienabschnitte relativ zum Schneidsieb zu bewegen, und/oder wobei
das Schneidsieb (620) drehbar eingerichtet ist.

4. System nach einem der Ansprüche 1 bis 3, wobei die Zerkleinerungsvorrichtung (203, 306, 403a, 403b, 503) zumindest ein Rotationsmesser (622), und optional zumindest ein stationäres Schneidwerkzeug (623) umfasst.

5. System nach einem der Ansprüche 1 bis 4, wobei die Sieböffnungen (628) einen Äquivalentdurchmesser aufweisen, der im Bereich zwischen 0,5 mm und 1, 5mm, oder im Bereich von 0,8 mm bis 1 mm ist

6. System nach einem der Ansprüche 1 bis 5, wobei die Sieböffnungen (628) in Reihen angeordnet sind, wobei
die Reihen einen Abstand (v) aufweisen, der in einem Bereich von 1 mm bis 3,6 mm, oder im Bereich von 1,5 mm bis 2,4 mm liegt, und/oder wobei
die Sieböffnungen (628) innerhalb der Reihen einen Abstand (ts) aufweisen, der in einem Bereich von 2 mm bis 4,2 mm, oder im Bereich von 1,8 mm bis 2,8 mm liegt, und/oder wobei
die Sieböffnungen (628) benachbarter Reihen um einen Abstand (tr) voneinander versetzt angeordnet sind, der in einem Bereich von 0,4 mm bis 2,1 mm, oder im Bereich von 0,6 mm bis 1,4 mm liegt.

7. System nach einem der Ansprüche 1 bis 6, wobei die Schneidvorsprünge (626) je eine Schneidkante (627) umfassen, und wobei die Schneidvorsprünge (626) vorzugsweise gestanzte Schneidvorsprünge (626) sind.

8. System nach einem der Ansprüche 1 bis 7, wobei das System weiterhin zumindest eine Fördervorrichtung (204, 307, 404a, 404b, 504, 508) umfasst, die dazu eingerichtet ist zerkleinerte Polymerfolienabschnitte von der Zerkleinerungsvorrichtung (203, 306, 403a, 403b, 503) abzuführen.

9. System nach einem der Ansprüche 1 bis 8, weiterhin umfassend eine Absackvorrichtung, die dazu eingerichtet ist zerkleinerte Polymerfolienabschnitte für eine Lagerung oder Zwischenlagerung zu verpacken.

10. System nach einem der Ansprüche 1 bis 9, weiterhin umfassend eine Dosiervorrichtung (313, 512), die dazu eingerichtet ist zerkleinerte Polymerfolienabschnitte zu dosieren und einem Extruder (10) zuzuführen.

11. System nach einem der Ansprüche 1 bis 10, wobei die Zuführvorrichtung (304, 502a, 502b) dazu eingerichtet ist Polymerfolienabschnitte, insbesondere Randabschnitte, automatisiert aufzugreifen und der Zerkleinerungsvorrichtung (203, 306, 403a, 403b, 503) zuzuführen.

12. Verfahren zur Wiederaufbereitung von ultrahochmolekularen Polymerfolienabschnitten (2), insbesondere von Membranfolien, wie Batterieseparator-, BSF, -Folien, vorzugsweise unter Verwendung eines Systems nach einem der Ansprüche 1 bis 11, wobei das Verfahren folgendes umfasst:
Bereitstellen zumindest eines ultrahochmolekularen Polymerfolienabschnitts (1,2);
Zuführen des Polymerfolienabschnitts (2) an eine Zerkleinerungsvorrichtung (203, 306, 403a, 403b, 503);
Zerkleinern des zugeführten Polymerfolienabschnitts (2) mittels der Zerkleinerungsvorrichtung (203, 306, 403a, 403b, 503), wobei
die Zerkleinerungsvorrichtung zumindest ein Schneidsieb (624) umfasst, wobei das Schneidsieb (624) eine Vielzahl von Sieböffnungen (628) und eine Vielzahl von Schneidvorsprüngen (626) umfasst, wobei zumindest ein Schneidvorsprung (626) eine ihm zugeordnete Sieböffnung (628) überspannt, und wobei
das Zerkleinern das Erzeugen einer Relativbewegung zwischen dem Schneidsieb (620) und dem zugeführten Polymerfolienabschnitt (2) umfasst.

13. Verfahren nach Anspruch 12, wobei das Zerkleinern des zugeführten Polymerfolienabschnitts ein Zerkleinern mittels zumindest eines Rotationsmessers umfasst, und wobei das Zerkleinern mittels des Rotationsmessers vor dem Zerkleinern mittels des Schneidsiebs erfolgt.

14. Verfahren nach Anspruch 12 oder 13, weiterhin umfassend
Regeln einer Einzugsgeschwindigkeit und/oder Einzugsmenge der Zuführvorrichtung und/oder einer Leistung der Zerkleinerungsvorrichtung.

15. Verfahren nach einem der Ansprüche 12 bis 14, weiterhin umfassend
Verpacken der zerkleinerten Folienabschnitte und/oder
Zuführen der zerkleinerten Folienabschnitte an einen Extruder zur Folienherstellung, wobei der Anteil der zerkleinerten Folienabschnitte 1 Gew% bis 50 Gew% des Feststoffanteils der extrudierten Folie beträgt.
